# EUROPÄISCHE PATENTSCHRIFT

(11) **EP 0 987 495 B1**
(45) Veröffentlichungstag und Bekanntmachung des Hinweises auf die Patenterteilung: **29.10.2003**
(21) Anmeldenummer: 98810923.7
(22) Anmeldetag: 16.09.1998
(51) Int. Cl.: F23R 3/26, F02C 3/30

(54) **Verfahren zum Minimieren thermoakustischer Schwingungen in Gasturbinenbrennkammern**
Method for minimizing thermo-acoustic vibrations in gas turbine combustion chambers
Procédé pour minimiser les vibrations thermoacoustiques dans les chambres de combustion de turbines à gaz

(43) Veröffentlichungstag der Anmeldung: 22.03.2000
(73) Patentinhaber: ALSTOM (Switzerland) Ltd, 5401 Baden (CH)
(72) Erfinder: Gutmark, Ephraim, Prof. Dr., Baton Rouge, LA 70810 (US); Paschereit, Christian Oliver, Dr., 5400 Baden (CH); Weisenstein, Wolfgang, 5453 Remetschwil (CH)

(56) Entgegenhaltungen:
- DE-A- 4 339 094
- US-A- 5 791 889

## Beschreibung

### Technisches Gebiet

Die Erfindung betrifft ein Verfahren zum Minimieren thermoakustischer Schwingungen in Gasturbinenbrennkammern.

### Stand der Technik

Es ist bekannt, daß in Brennkammern von Gasturbinen häufig unerwünschte thermoakustische Schwingungen auftreten. Mit dem Begriff "thermoakustische Schwingungen" werden sich gegenseitig aufschaukelnde thermische und akustische Störungen bezeichnet Es können dabei hohe Schwingungsamplituden auftreten, die zu unerwünschten Effekten, wie etwa zu einer hohen mechanischen Belastung der Brennkammer, einer erhöhten NOₓ-Emissionen durch eine inhomogene Verbrennung und sogar zu einem Erlöschen der Flamme führen können. Dies trifft insbesondere für Verbrennungssysteme mit geringer akustischer Dämpfung zu.

Bei herkömmlichen Brennkammern hat die in die Brennkammer einströmende Kühlluft eine bedeutende Funktion, da der Kühlluftfilm an der Brennkammerwand schalldämpfend wirkt und damit zur Verminderung den thermoakustischen Schwingungen beiträgt. Um niedrige NOₓ-Emissionen zu erzeilen, wird in modernen Gasturbinen eine zunehmender Anteil der Luft durch die Brenner selbst geleitet, der Kühlluftstrom also reduziert. Durch die damit einhergehende geringere Schalldämpfung treten die eingangs besprochenen Probleme mit den modernen Brennkammern demnach verstärkt auf.

Eine Möglichkeit der Schalldämpfung besteht im Ankoppeln von Helmholtz-Dämpfern in der Brennkammerhaube oder im Bereich der Kühlluftzuführung. Bei engen Platzverhältnissen, wie sie für moderne, kompakt gebaute Brennkammern typisch sind, kann die Unterbringung solcher Dämpfer jedoch Schwierigkeiten bereiten. Diese Methode ist daher mit einem grossen konstruktiven Aufwand verbunden.

*Aus DE 4339094 ist es bekannt, zur Dämpfung thermoakustischer Schwingungen, welche bei der Verbrennung eines einströmenden Brennstoffs in einer Brennkammer, insbesondere in einer Brennkammer einer Gasturbine, auftreten, diese Schwingungen zu messen und die Verbrennung nach Massgabe der gemessenen Druckschwankungen dadurch zu verringern, dass der Ort der mit der Verbrennung verbundenen Wärmefreisetzungsschwankung durch Steuerung des Zündzeitpunkts variiert wird. Jenes geschieht vorzugsweise durch Eindüsen eines zusätzlichen Mediums in die Brennkammer. Je nach Provenienz des zusätzlichen Mediums hat dies eine unterschiedliche Zündverzögerung zur Folge*.

Daneben ist bekannt, dass die strömungsmechanische Stabilität eines Gasturbinenbrenners von entscheidender Bedeutung für das Auftreten thermoakustischer Schwingungen ist. Die im Brenner entstehenden strömungsmechanischen Instabilitätswellen führen zur Ausbildung von Wirbeln. Diese auch als kohärente Strukturen bezeichneten Wirbel spielen eine bedeutende Rolle bei Mischungsvorgängen zwischen Luft und Brennstoff. Die Dynamik der kohärenten Strukturen beeinflusst die Verbrennung und die damit verbundene Wärmefreisetzung. Diese Wirbel können daher zu einer periodischen Wärmefreisetzung der Flamme des Brenners und damit zu Druckschwankungen führen. Insbesondere wenn über die gesamte Fläche des Brenners keine homogene Vermischung von Brennstoff und Luft gegeben ist, wirkt sich die Entstehung von kohärenten Wirbelstrukturen stark auf die Ausbildung von thermoakustischen Instabilitäten aus.

Somit liegt eine weitere Möglichkeit zur Reduzierung der Schwingungsneigung eines Brenners in der Verhinderung oder zumindest Verminderung der oben beschriebenen Wirbelbildung. Dies führt zu einer Verbesserung der Vermischung von Brennstoff und Luft und zu einer Verringerung der Schwingungsneigung des Brenners. In diesem Zusammenhang übt die Art der Brennstoffeindüsung einen entscheidenden Einfluss auf die Mischungsqualität und damit auf Lage und Form der sich einstellenden Flamme aus.

### Darstellung der Erfindung

Hier setzt die Erfindung ein. Es soll ein Verfahren zum Minimieren der Druckamplitude thermoakustischer Schwingungen in Gasturbinenbrennkammern geschaffen werden.
Diese Aufgabe wird erfindungsgemäss durch ein Verfahren zum Minimieren der Druckamplitude thermoakustischer Schwingungen in einer Gasturbine gemäss dem unabhängigen Patentanspruch gelöst.

Erfindungsgemäss erfolgt eine Zumischung eines inerten Gases zu dem Brennstoffstrom *zum* Gasturbinenbrenner. Dadurch wird das Impulsverhältnis Brennstoff/Luft erhöht, was zu einer Verringerung der Ausbildung kohärenter Strukturen und zu einer verbesserten Durchmischung des Brennstoff-/Luft-Gemischs führt. Gemäss dem erfindungsgemässen Verfahren kann somit durch Variation der Menge an zugemischtem inerten Gas an der Gasturbine eine Verminderung der thermoakustischen Schwingungen erreicht werden.

Durch die Abnahme der Pulsationen bei kontrollierter Zugabe von Inertgas wird der Ausstoss von NOₓ verringert. Die Abnahme des Ausstosses an NOₓ verhält sich dabei proportional zur Abnahme der Druckschwingungsamplituden.

Im Rahmen der vorliegenden Erfindung wird der Begriff "Inertgas" in Bezug auf den im Brenner stattfindenden Verbrennungsvorgang verwendet. Dies bedeutet, dass das zusätzlich zugemischte Inertgas nicht an den chemischen Reaktionen teilnimmt, die während der Verbrennung des Brennstoffs stattfinden. Gase, die diesen genannten Anforderungen genügen, sind zum Beispiel Stickstoff, Kohlendioxid oder Wasserdampf. Diese Gase oder auch Gemische dieser Gase werden gemäss vorliegender Erfindung bevorzugt verwendet. Daneben können aber auch andere Gase, welche unter den beschriebenen Bedingungen nicht reagieren, verwendet werden. Als Beispiel seien die Edelgase He, Ne, Ar, Kr und Xe genannt.

In diesem Zusammenhang wird darauf hingewiesen, dass durch die zusätzliche Eindüsung eines Inertgases die λ-Zahl nicht verändert wird. Die λ-Zahl wird im Allgemeinen zur Beschreibung des Luft-/Brennstoff-Verhältnisses bei Verbrennungsvorgängen verwendet. Die λ-Zahl ist ein Mass für das Verhältnis der in den Verbrennungsraum eingeführten zu der zur vollständigen Verbrennung theoretisch benötigten Luftmenge. Gasturbinenbrenner der im Zusammenhang mit der vorliegenden Erfindung verwendeten Art werden in der Regel in einem Bereich von 1,8 ≤ λ ≤ 2,2 betrieben. Durch die erfindungsgemässe Zumischung eines inerten Gases zu dem Brennstoffstrom wird also die λ-Zahl nicht verändert, da das zusätzlich anwesende inerte Gas nicht an dem Verbrennungsvorgang teilnimmt.

Das erfindungsgemässe Verfahren ist nicht nur auf *Vormischbrenner, wie beispielsweise der in EP 321809 oder EP 704657 beschriebenen Art beschränkt, sondern kann auch für Diffusionsbrenner* eingesetzt werden.

Das erfindungsgemässe Verfahren kann auch als Abhilfe bei verbrennungsgetriebenen Schwingungen aufgrund von weichen Brennstoffsystemen angewendet werden. Durch die zusätzliche Eindüsung von Inertgas nimmt der Druckverlust über die Brennstoffeindüsung zu. Dadurch werden Druckschwankungen im Brennstoffsystem verhindert.

Die Menge an einzudüsendem Inertgas lässt sich wirksam verringern, wenn anstelle einer kontinuierlichen Eindüsung eine modulierte Eindüsung gewählt wird. Unter modulierter Eindüsung wird erfindungsgemäss jede zeitlich variierende Eindüsung von inertem Gas verstanden. Die Modulation kann erfindungsgemäss mit einer beliebigen Frequenz erfolgen. Bevorzugt erfolgt die Eindüsung mit einer Frequenz zwischen 0,3 Hz und 5 kHz, wobei der Bereich von 5 Hz bis 150 Hz bevorzugt wird. Die Menge des pro Zeiteinheit eingedüsten inerten Gases kann dabei im Rahmen der vorliegenden Erfindung in beliebiger Weise variiert werden. Bevorzugt wird das Gas in Form eines zeitlich begrenzten Pulses eingedüst und anschließend für eine bestimmte Zeit kein Gas zugegeben. Bezeichnet man den Zeitraum der Gaseindüsung mit t_{Zugabe} und den Zeitraum ohne Gaseindüsung mit t₀, so ergibt sich die Periodendauer der Modulation der Gaseindüsung zu τ = t_{Zugabe} + t₀ und die Frequenz zu ν = 1/τ = 1/(t_{Zugabe} + t₀).

Im Rahmen der vorliegenden Erfindung wird mit dem Begriff "duty cycle" das Verhältnis von t_{Zugabe} zu τ in Prozent ausgedrückt. Bei einem duty cycle von 50% ist somit der Zeitraum der zusätzlichen Gaseindüsung gleich dem Zeitraum, in dem kein zusätzliches Gas eingedüst wird. Die Zugabe einer konstanten Menge an Gas entspricht einem duty cycle von 100%.

Die Eindüsung von zusätzlichem inertem Gas in die Vormischgaskanäle des Brenners erfolgt erfindungsgemäß mit einem duty cycle kleiner 100%. Bevorzugt wird der Bereich 1% ≤ duty cycle ≤ 50%.

### Kurze Beschreibung der Zeichnungen

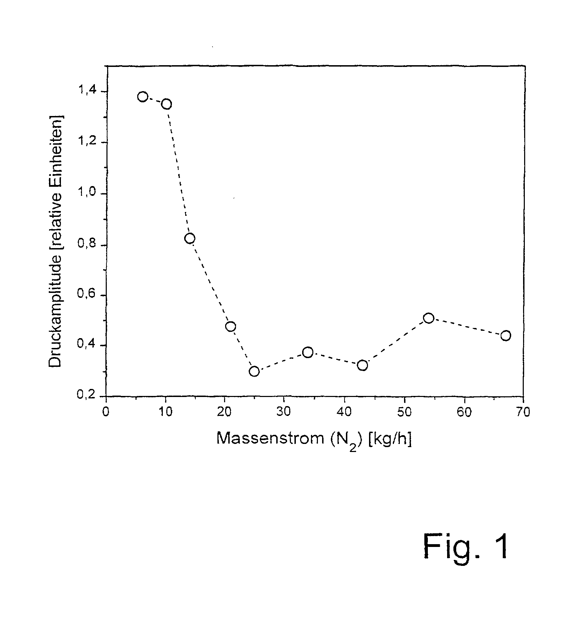

Die Erfindung soll nachfolgend anhand eines Ausführungsbeispiels im Zusammenhang mit der Zeichnung näher erläutert werden. Es zeigt
- Fig. 1: eine Auftragung der relativen Druckamplitude gegen den Massenstrom an Stickstoff (Inertgas), der in einer konstanten Menge dem Brennstoffstrom beigemischt wird.

### Weg zur Ausführung der Erfindung

In Figur 1 ist die relative Druckamplitude gegen den Massenstrom an zusätzlich in den Brennstoffstrom eingedüstem Inertgas (Stickstoff) aufgetragen. Die Versuche wurden an einem Vormischbrenner *gemäss EP 321809* bei ca. 450 kW Leistung und λ = 2 durchgeführt. Es ist deutlich zu erkennen, dass die Druckamplitude der thermoakustischen Schwingungen bei Eindüsung einer zusätzlichen konstanten Menge an Inertgas von mehr als 10 kg/h stark vermindert wird.

Untersuchungen bei unterschiedlicher Leistung des Brenners und Variation von λ zwischen 1,8 und 2,2 führten zu ähnlichen Ergebnissen. Bei einer modulierten Eindüsung des Inertgases ergab sich eine ähnliche Verminderung der Druckamplitude, wobei aber eine geringere Gesamtmenge an Stickstoff zugegeben wurde.

## Patentansprüche

1. Verfahren zum Minimieren der Druckamplitude thermoakustischer Schwingungen in einer *Brennkammer einer* Gasturbine, *welche Brennkammer mittels mindestens einem Brenner betrieben wird*, **dadurch gekennzeichnet, dass** dem Brennstoffstrom *zu dem Brenner* ein inertes Gas *zugemischt* wird.

2. Verfahren nach Anspruch 1, **dadurch gekennzeichnet, dass** das inerte Gas Stickstoff, Kohlendioxid, Wasserdampf oder ein Gemisch dieser Gase ist.

3. Verfahren nach Anspruch 1, **dadurch gekennzeichnet, dass** die Zumischung des inerten Gases moduliert erfolgt.

4. Verfahren nach Anspruch 3, **dadurch gekennzeichnet, dass** eine vollständige Modulationsperiode aus der Zumischung des inerten Gases in Form eines zeitlich begrenzten Pulses und aus der nachfolgend fehlenden Zugabe von inertem Gas besteht.

5. Verfahren nach Anspruch 3 oder 4, **dadurch gekennzeichnet, dass** die Frequenz der Modulation zwischen 0,3 Hz und 5 kHz liegt.

6. Verfahren nach Anspruch 5, **dadurch gekennzeichnet, dass** die Frequenz der Modulation zwischen 5 Hz und 150 Hz liegt.

7. Verfahren nach einem der Ansprüche 3 bis 6, **dadurch gekennzeichnet, dass** der duty cycle weniger als 100% beträgt.

8. Verfahren nach Anspruch 7, **dadurch gekennzeichnet, dass** die Bedingung erfüllt ist 1% ≤ duty cycle ≤ 50%.

## Claims

1. Method for minimizing the pressure amplitude of thermoacoustic oscillations in a combustion chamber of a gas turbine, which combustion chamber is operated by means of at least one burner, **characterized in that** an inert gas is admixed to the stream of fuel to the burner.

2. Method according to Claim 1, **characterized in that** the inert gas is nitrogen, carbon dioxide, steam or a mixture of these gases.

3. Method according to Claim 1, **characterized in that** the admixing of the inert gas is modulated.

4. Method according to Claim 3, **characterized in that** a complete modulation period consists of the admixing of the inert gas in the form of a pulse of limited time and of the subsequent absence of the inert gas addition.

5. Method according to Claim 3 or 4, **characterized in that** the modulation frequency is between 0.3 Hz and 5 kHz.

6. Method according to Claim 5, **characterized in that** the modulation frequency is between 5 Hz and 150 Hz.

7. Method according to one of Claims 3 to 6, **characterized in that** the duty cycle is lower than 100%.

8. Method according to Claim 7, **characterized in that** the condition 1% ≤ duty cycle ≤ 50% is satisfied.

## Revendications

1. Procédé pour minimiser l'amplitude de pression d'oscillations thermoacoustiques dans une chambre de combustion d'une turbine à gaz, laquelle chambre de combustion est alimentée par au moins un brûleur, **caractérisé en ce que** l'on mélange un gaz inerte à l'écoulement de combustible envoyé dans le brûleur.

2. Procédé selon la revendication 1, **caractérisé en ce que** le gaz inerte est l'azote, le dioxyde de carbone, la vapeur d'eau ou un mélange de ces gaz.

3. Procédé selon la revendication 1, **caractérisé en ce que** l'addition du gaz inerte est modulée.

4. Procédé selon la revendication 3, **caractérisé en ce qu'**une période entière de modulation est constituée de l'addition du gaz inerte sous la forme d'une pulsation limitée dans le temps et ensuite de l'absence de l'addition de gaz inerte.

5. Procédé selon la revendication 3 ou 4, **caractérisé en ce que** la fréquence de la modulation est située entre 0,3 Hz et 5 kHz.

6. Procédé selon la revendication 5, **caractérisé en ce que** la fréquence de la modulation est comprise entre 5 Hz et 150 Hz.

7. Procédé selon l'une quelconque des revendications 3 à 6, **caractérisé en ce que** le cycle de travail est inférieur à 100%.

8. Procédé selon la revendication 7, **caractérisé en ce que** la condition 1% ≤ cycle de travail ≤ 50% est satisfaite.
